# EUROPEAN PATENT APPLICATION

(11) **EP 4 825 939 A1**
(43) Date of publication of application: **21.10.2026**
(21) Application number: 24904294.6
(22) Date of filing: 13.12.2024
(51) Int. Cl.: C09J 175/04, C09J 11/04, C09D 175/04, C09D 7/61, B32B 7/12, B32B 15/01

(54) **ADHESIVE COATING COMPOSITION FOR ELECTRICAL STEEL SHEET, ELECTRICAL STEEL SHEET LAMINATE, AND METHOD FOR MANUFACTURING SAME**

(30) Priority: 15.12.2023 KR 20230183308
(71) Applicant: POSCO Co., Ltd, Gyeongsangbuk-do 37859 (KR)
(72) Inventor: HA, Bongwoo, Pohang-si, Gyeongsangbuk-do 37859 (KR); LEE, Donggyu, Pohang-si, Gyeongsangbuk-do 37859 (KR); KIM, Jungwoo, Pohang-si, Gyeongsangbuk-do 37859 (KR); CHOI, Yangho, Pohang-si, Gyeongsangbuk-do 37859 (KR); NO, Taeyoung, Pohang-si, Gyeongsangbuk-do 37859 (KR)
(74) Representative: Meissner Bolte Partnerschaft mbB
(86) International application number: PCT/KR2024/020334
(87) International publication number: WO 2025/127729

(57) **Abstract**

An embodiment of the present invention provides an adhesive coating composition for an electrical steel sheet including: a urethane resin and a metal inorganic acid salt, wherein the urethane resin includes repeating units represented by Chemical Formula 1 and Chemical Formula 2.

## Description

### [Technical Field]

An embodiment of the present invention relates to an adhesive coating composition for an electrical steel sheet, an electrical steel sheet laminate, and a method for manufacturing the same. Specifically, an embodiment of the present invention relates to an adhesive coating composition for an electrical steel sheet that forms a fusion layer capable of adhering (fastening) electrical steel sheets without using conventional fastening methods such as welding, clamping, or interlocking, an electrical steel sheet laminate, and a method for manufacturing the same. More specifically, an embodiment of the present invention relates to an adhesive coating composition for an electrical steel sheet, an electrical steel sheet laminate, and a method for manufacturing the same, which improve the adhesive strength and noise suppression characteristics of an electrical steel sheet laminate by controlling the components of a fusion layer formed between electrical steel sheets.

### [Background Art]

Non-oriented electrical steel sheets are steel sheets having uniform magnetic properties in all directions on the rolled sheet and are widely used for iron cores of motors and generators, electric motors, small transformers, and the like.

Electrical steel sheets can be divided into two types: those that require stress relief annealing (SRA) to improve magnetic properties after punching, and those that omit stress relief annealing if the cost loss due to heat treatment is greater than the magnetic property improvement effect due to stress relief annealing.

The insulating film is a film that is coated in the final manufacturing process of laminates such as iron cores of motors and generators, electric motors, and small transformers, and is generally required to have electrical properties that suppress the generation of eddy currents. In addition, continuous punching processability, anti-stickiness, and surface adhesion are also required. Continuous punching processability refers to the ability to suppress wear of a mold when making a steel core by stacking multiple pieces after punching them into a specific shape. Anti-stickiness refers to the ability of the iron core sheets not to stick to each other after the stress relief annealing process, which removes processing stress from the steel sheet to restore magnetic properties.

In addition to these basic characteristics, excellent coating workability of a coating solution and stability of a solution that may be used for a long time after mixing are also required. These insulating films may be manufactured into an electrical steel sheet laminate only by using separate fastening methods such as welding, clamping, and interlocking.

### [Disclosure]

### [Technical Problem]

An embodiment of the present invention provides an adhesive coating composition for an electrical steel sheet, an electrical steel sheet laminate, and a method for manufacturing the same. Specifically, an embodiment of the present invention provides an adhesive coating composition for an electrical steel sheet that forms a fusion layer capable of adhering (fastening) electrical steel sheets without using conventional fastening methods such as welding, clamping, or interlocking, an electrical steel sheet laminate, and a method for manufacturing the same. More specifically, it provides an adhesive coating composition for an electrical steel sheet, an electrical steel sheet laminate, and a method for manufacturing the same, which improve the adhesive strength between electrical steel sheets by controlling the components of a fusion layer formed between electrical steel sheets.

### [Technical Solution]

An embodiment of the present invention provides an adhesive coating composition for an electrical steel sheet including: a urethane resin and a metal inorganic acid salt, wherein the urethane resin includes repeating units represented by the following Chemical Formula 1 and the following Chemical Formula 2.

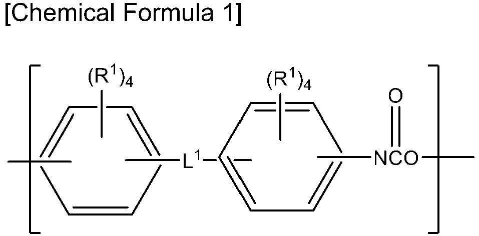

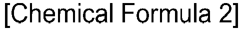

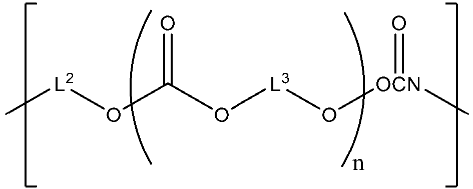

(In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. L¹, L², and L³ each represent a single bond or a divalent linking group. n represents an integer from 1 to 50.)

The urethane resin may include 50 to 90 parts by weight and the metal inorganic acid salt includes 10 to 50 parts by weight, based on 100 parts by weight of the total of the urethane resin and the metal inorganic acid salt.

The urethane resin may include repeating units represented by the following Chemical Formula 3 and the above Chemical Formula 2.

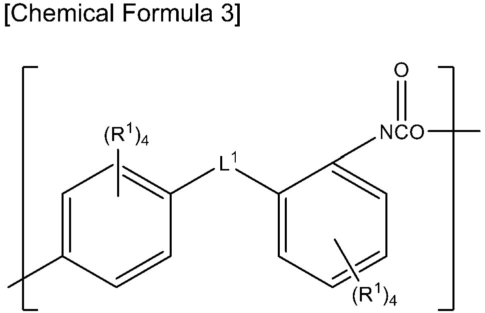

(In Chemical Formula 3, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. L¹ represents a single bond or a divalent linking group.)

The urethane resin may be formed by the reaction of a diisocyanate monomer and a polyol represented by the following Chemical Formula 4.

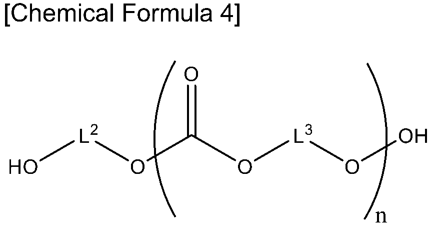

(In Chemical Formula 4 above, L² and L³ each represent a single bond or a divalent linking group. n represents an integer from 1 to 50.)

The diisocyanate monomer may include an aromatic diisocyanate monomer.

The aromatic diisocyanate monomer may be a compound represented by the following Chemical Formula 5:

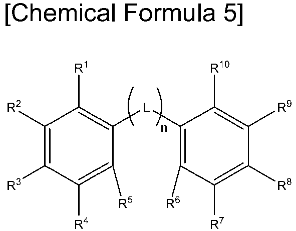

(In Chemical Formula 5, R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, a halogen element, or an isocyanate group,
at least one of R¹ to R⁵ is an isocyanate group,
at least one of R⁶ to R¹⁰ is an isocyanate group,
cases in which R³ and R⁸ are simultaneously isocyanate groups are excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is an integer from 1 to 10.)

The metal inorganic acid salt may include a phosphate, a silicate, or a titanate that includes one or more of Al, Mg, Ca, Co, Zn, Zr, and Fe.

An electrical steel sheet adhesive coating composition according to an embodiment of the present invention may further include one or more selected from the group consisting of a coupling agent, a wetting agent, a curing agent, and a curing catalyst.

The coupling agent may be included in an amount of 0.2 parts by weight to 3 parts by weight, based on 100 parts by weight of the total of the urethane resin and the metal inorganic acid salt.

The curing agent may be included in an amount of 0.5 parts by weight to 2 parts by weight, based on 100 parts by weight of the total of the urethane resin and the metal inorganic acid salt.

The curing catalyst may be included in an amount of 0.1 parts by weight to 1 parts by weight, based on 100 parts by weight of the total of the urethane resin and the metal inorganic acid salt.

The wetting agent may be included in an amount of 0.05 parts by weight to 0.5 parts by weight, based on 100 parts by weight of the total of the urethane resin and the metal inorganic acid salt.

Another embodiment of the present invention provides an electrical steel sheet laminate including: a plurality of electrical steel sheets; and a fusion layer positioned between the plurality of electrical steel sheets; wherein the fusion layer includes a urethane resin and a metal inorganic acid salt, and the urethane resin includes repeating units represented by the following Chemical Formula 1 and Chemical Formula 2.

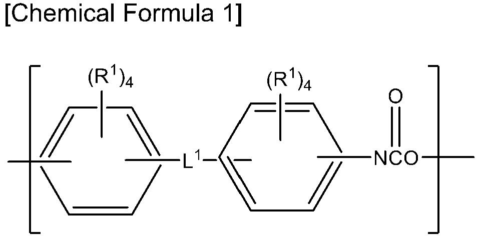

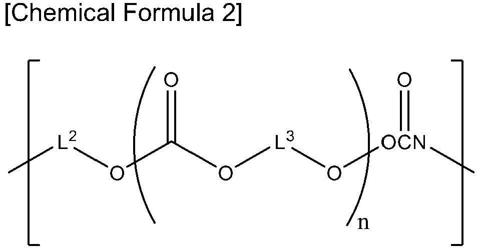

(In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. L¹, L², and L³ each represent a single bond or a divalent linking group. n represents an integer from 1 to 50.)

The fusion layer may include 50 to 90 parts by weight of the urethane resin and 10 to 50 parts by weight of the metal inorganic acid salt, based on 100 parts by weight of the total of the urethane resin and the metal inorganic acid salt.

Another embodiment of the present invention provides A method for manufacturing an electrical steel sheet laminate, including: a step of applying the adhesive coating composition according to claim 1 to one or both surfaces of an electrical steel sheet, and then curing it to form an adhesive coating layer; and a step of laminating a plurality of electrical steel sheets on which the adhesive coating layer is formed and heat-fusing them to form a fusion layer.

### [Advantageous Effects]

According to an embodiment of the present invention, the adhesive strength between electrical steel sheets may be improved by controlling the components of the fusion layer formed between the electrical steel sheets.

According to an embodiment of the present invention, the electrical steel sheets may be adhered without using conventional fastening methods such as welding, clamping, or interlocking, so that the noise and vibration suppression effect of the electrical steel sheet laminate is more excellent.

In addition, by using a urethane resin with a specific chemical structure, the adhesive strength is excellent even in an automotive transmission oil environment.

### [Description of the Drawings]

FIG. 1 is a schematic view of an electrical steel sheet laminate.
FIG. 2 is a schematic view of a cross-section of an electrical steel sheet laminate according to an embodiment of the present invention.

### [Mode for Invention]

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as second part, component, area, layer, or section within the range of the present invention.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

In the present specification, "substituted" means that, unless otherwise defined, at least one hydrogen of a compound is substituted by a C1 to C30 alkyl group; a C1 to C10 alkoxy group; a silane group; an alkylsilane group; an alkoxysilane group; or an ethyleneoxyl group.

In the present specification, "hetero" refers to, unless otherwise defined, an atom selected from the group consisting of N, O, S, and P.

The alkyl group may be a C1 to C20 alkyl group, specifically, a C1 to C6 lower alkyl group, a C7 to C10 intermediate alkyl group, or a C11 to C20 higher alkyl group.

For example, a C1 to C4 alkyl group means that there are 1 to 4 carbon atoms in an alkyl chain, and is selected from the group consisting of methyl, ethyl, propyl, isopropyl, n-butyl, isobutyl, sec-butyl, and t-butyl.

A typical alkyl group includes a methyl group, an ethyl group, a propyl group, an isopropyl group, a butyl group, an isobutyl group, a t-butyl group, a pentyl group, a hexyl group, a cyclopropyl group, a cyclobutyl group, a cyclopentyl group, a cyclohexyl group, and the like.

The present invention will be described more fully hereinafter with reference to the accompanying drawings, in which embodiments of the invention are shown. As those skilled in the art would realize, the described embodiments may be modified in various different ways, all without departing from the spirit or scope of the present disclosure.

In one embodiment of the present invention, an electrical steel sheet adhesive coating composition comprises a urethane resin and a metal inorganic salt.

Hereinafter, each component will be described in detail.

First, the urethane resin serves to lower the degree of cross-linking of the composition and to increase its viscoelastic properties.

In the embodiment of the present invention, by including a urethane resin having a specific chemical structure, the paint film adhesion, peel adhesive strength, or ATF resistance of the manufactured electrical steel sheet laminate may be improved. Specifically, the urethane resin includes repeating units represented by the following Chemical Formula 1 and Chemical Formula 2.

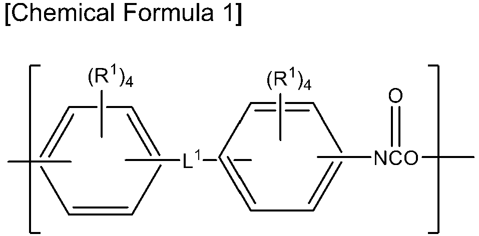

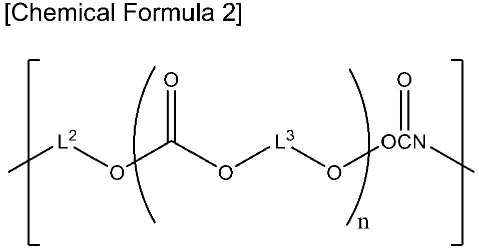

(In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. L¹, L², and L³ each represent a single bond or a divalent linking group. n represents an integer from 1 to 50.)

Chemical Formula 1 represents a chemical structure derived from an aromatic diisocyanate, which is used as a raw material in the synthesis process of a urethane resin.

Due to the structure of Chemical Formula 1, heat resistance may be improved due to the hardness characteristics caused by the two benzene ring structures in the aromatic diisocyanate.

In Chemical Formula 1, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. In Chemical Formula 1, R¹ is connected to the inside of the benzene ring, which means that it is substituted at any of the six substitution positions of the benzene ring. More specifically, R¹ may each independently be hydrogen, deuterium, or a substituted or unsubstituted C1 to C10 alkyl group. R¹ may each independently be hydrogen or deuterium.

In Chemical Formula 1, L¹ represents a single bond or a divalent linking group. Specifically, the divalent linking group may be one or more of a substituted or unsubstituted C1 to C10 alkylene group, a substituted or unsubstituted C2 to C10 alkynylene group, a substituted or unsubstituted C6 to C20 arylene group, a substituted or unsubstituted C5 to C20 heteroarylene group, -O-, -(CO)-, -S-, -N-, and -P-. More specifically, L¹ may be a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group. More specifically, L¹ may be a substituted or unsubstituted C1 to C10 alkylene group.

Specifically, the repeating unit of Chemical Formula 1 may be represented as Chemical Formula 3 below.

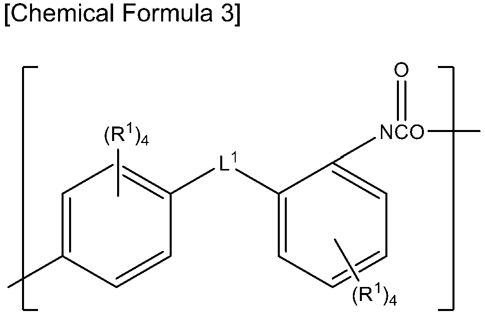

(In Chemical Formula 3, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. L¹ represents a single bond or a divalent linking group.)

As in Chemical Formula 3, since the linking group L¹, the -NCOO- group, and the linking group to other repeating units are not bonded to symmetrical positions of the two benzene rings, the paint film adhesion, peel adhesive strength, or ATF resistance of the manufactured electrical steel sheet laminate may be further improved.

In Chemical Formula 3, R¹ and L¹ are the same as those described in Chemical Formula 1 above, so redundant description is omitted.

The repeating unit of chemical formula 1 may be included in an amount of 20 to 50 wt% in the urethane resin. If the repeating unit of Chemical Formula 1 is too small, a problem of deterioration in the high-temperature fastening force of the urethane resin may occur, while if it is too large, a problem of deterioration in heat-fusion property may occur. More specifically, the repeating unit of chemical formula 1 may be included in an amount of 30 to 40 wt% in the urethane resin. The ratio of the repeating unit of Chemical Formula 1 may be adjusted through the ratio of the aromatic diisocyanate monomer added during the manufacture of the urethane resin.

Chemical Formula 2 represents a chemical structure derived from a polyol used as a raw material in the synthesis process of the urethane resin.

Due to the structure of Chemical Formula 2, the heat-fusion propensity may be improved due to the increase in softness characteristics by a plurality of -COO- and -O- structures.

In Chemical Formula 2, L² and L³ each independently represent a single bond or a divalent linking group. Specifically, the divalent linking group may be one or more of a substituted or unsubstituted C1 to C10 alkylene group, a substituted or unsubstituted C2 to C10 alkynylene group, a substituted or unsubstituted C6 to C20 arylene group, a substituted or unsubstituted C5 to C20 heteroarylene group, -O-, -(CO)-, -S-, -N-, and -P-. More specifically, L¹ may be a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group. More specifically, L¹ may be a substituted or unsubstituted C1 to C10 alkylene group.

n may be an integer from 1 to 50. If n is too large, problems regarding heat resistance may occur. More specifically, n may be 1 to 20.

The repeating unit of Chemical Formula 2 may be included in an amount of 50 to 80 wt% in the urethane resin. If the repeating unit of Chemical Formula 2 is too small, a problem of deterioration in heat-fusion property may occur. If the repeating unit of Chemical Formula 2 is too large, a problem of deterioration in the high-temperature fastening force of the urethane resin may occur. More specifically, the repeating unit of Chemical Formula 2 may be included in an amount of 60 to 70 wt% in the urethane resin. The ratio of the repeating unit of Chemical Formula 2 may be adjusted through the ratio of the polyol added during the manufacture of the urethane resin.

The urethane resin may be formed by the reaction of a diisocyanate monomer and a polyol represented by the following Chemical Formula 4.

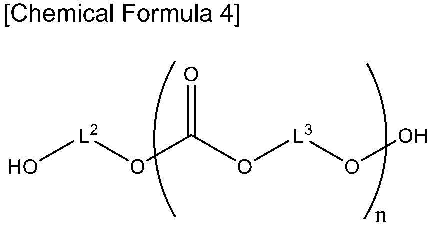

(In Chemical Formula 4 above, L² and L³ each represent a single bond or a divalent linking group. n represents an integer from 1 to 50.)

The polyol of Chemical Formula 4 has been described in relation to the repeating unit of Chemical Formula 2 in the urethane resin, so redundant descriptions will be omitted. L², L³, and n of Chemical Formula 4 are the same as those described in Chemical Formula 2.

The polyol may have a number average molecular weight of 400 to 1000 g/mol. If the molecular weight is too small, problems may arise in terms of heat-fusion properties. If the molecular weight is too large, problems may arise in terms of heat resistance. More specifically, the number average molecular weight of the polyol may be 500 to 800.

The aromatic diisocyanate monomer may be a compound represented by the following Chemical Formula 5:

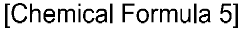

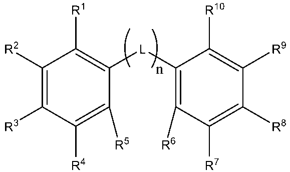

(In Chemical Formula 5, R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, a halogen element, or an isocyanate group,
wherein at least one of R¹ to R⁵ is an isocyanate group,
at least one of R⁶ to R¹⁰ is an isocyanate group,
except when R³ and R⁸ are both isocyanate groups,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is an integer from 1 to 10.)

The aromatic diisocyanate of Chemical Formula 5 has been described in relation to the repeating unit of Chemical Formula 1 of the urethane resin, so redundant descriptions will be omitted. R¹ to R¹⁰ of Chemical Formula 5 are the same as the description of R¹ of Chemical Formula 1, and L of Chemical Formula 5 is the same as the description of L¹ of Chemical Formula 1.

The aromatic diisocyanate monomer may be represented by the following Chemical Formula 6.

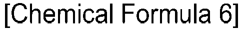

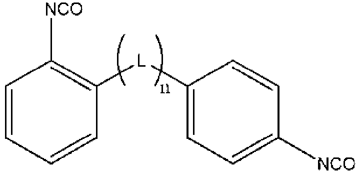

(In Chemical Formula 2, L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.)

More specifically, L may be a substituted or unsubstituted C1 to C10 alkylene group. More specifically, L may be a methylene group. The aromatic diisocyanate monomer may be methylene diphenyl diisocyanate.

The urethane resin may be included in an amount of 50 to 90 parts by weight, based on 100 parts by weight of the sum of the urethane resin and the metal inorganic acid salt. If too little urethane resin is included, the vibration suppression effect may be deteriorated due to the low viscoelastic properties of the composition. If too much urethane resin is included, the high-temperature adhesive strength may be deteriorated due to the low degree of crosslinking of the composition. More specifically, the urethane resin may be included in an amount of 55 to 85 parts by weight, based on 100 parts by weight of the sum of the urethane resin and the metal inorganic acid salt.

In the embodiment of the present invention, a metal inorganic acid salt is included together with the urethane resin. The metal inorganic acid salt serves to improve high-temperature adhesive strength by increasing the degree of crosslinking.

The metal inorganic acid salt is not particularly limited, but may include a phosphate, a silicate, or a titanate including one or more of Al, Mg, Ca, Co, Zn, Zr, and Fe.

More specifically, the metal inorganic acid salt may include a metal phosphate. The metal phosphate may include various metals without limitation. Specifically, the metal of the metal phosphate may include one or more of Al, Mg, Ca, Co, Zn, Zr, and Fe. More specifically, the metal phosphate may include one or more of first magnesium dihydrogen phosphate (Mg(H₂PO₄)₂) and first aluminum dihydrogen phosphate (Al(H₂PO₄)₃). More specifically, it may include first magnesium dihydrogen phosphate (Mg(H₂PO₄)₂) and first aluminum dihydrogen phosphate (Al(H₂PO₄)₃). In this case, the metal phosphate may include, based on the solid content, 10 to 60 parts by weight of first aluminum phosphate and 40 to 90 parts by weight of first magnesium phosphate, based on 100 parts by weight of the total metal phosphate.

An electrical steel sheet adhesive coating composition according to an embodiment of the present invention may further include one or more selected from the group consisting of a coupling agent, a wetting agent, a curing agent, and a curing catalyst.

The electrical steel sheet adhesive coating composition according to the embodiment of the present invention may further include a coupling agent to enhance the interfacial adhesive strength between an electrical steel sheet 10 and a fusion layer 20. The coupling agent may include a silane coupling agent, and more specifically, one or more of an epoxy-based silane coupling agent and an amino-based silane coupling agent may be included. More specifically, it may include 2(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-aminopropyltriethoxysilane, or 3-aminopropyltrimethoxysilane.

When the coupling agent is further included, it may be included in an amount of 0.2 to 3 parts by weight based on 100 parts by weight of the total of the urethane resin and the metal inorganic acid salt. If the coupling agent is included in too little amount, the effect of enhancing the interfacial adhesive strength between the electrical steel sheet and the fusion layer may not be sufficiently obtained. If the coupling agent is included in too much amount, precipitates may be generated in the adhesive coating composition due to a reaction between the coupling agents. Specifically, it may be included in an amount of 0.2 to 1 parts by weight.

The electrical steel sheet adhesive coating composition according to the embodiment of the present invention may further include a silicone-based wetting agent in the adhesive coating composition to enhance the interfacial adhesive strength between the electrical steel sheet 10 and the fusion layer 20. An example of the silicone-based wetting additive may include polyether-modified polydimethylsiloxane. The wetting agent may be added to a bonding composition for the electrical steel sheet to enhance the interfacial adhesive strength between the electrical steel sheet and the fusion layer.

The electrical steel sheet adhesive coating composition according to the embodiment of the present invention may include the wetting agent in an amount of 0.05 to 0.5 parts by weight, based on 100 parts by weight of the total of the urethane resin and the metal inorganic acid salt. If the content of the wetting agent is too high, problems such as coating layer defects due to excessive bubble generation in the coating solution may occur, while if the content of the wetting agent is too low, problems such as defects on the coating surface due to reduced wettability of the coating layer may occur. Specifically, it may be included in an amount of 0.05 to 0.15 parts by weight.

The electrical steel sheet adhesive coating composition according to the embodiment of the present invention may further include a curing agent to control the reactivity of the surface of the adhesive coating layer. The curing agent may include an aliphatic amine-based, aromatic amine-based, amino-amine-based, or imidazole-based curing agent. More specifically, a dicyandiamide-based curing agent may be included.

The electrical steel sheet adhesive coating composition according to the embodiment of the present invention may include the curing agent in an amount of 1 to 10 parts by weight, based on 100 parts by weight of the total of the urethane resin and the metal inorganic acid salt. The curing agent serves to control the reactivity of the surface of the adhesive coating layer. If the curing agent is included in an excessively small amount, the curing reaction of the fusion layer may be reduced, which may cause a problem of stickiness on the surface of the fusion layer. Conversely, if the curing agent is added in an excessively large amount, the fastening strength after low-temperature fusion may be reduced. Specifically, it may be included in an amount of 1 to 5 parts by weight.

The electrical steel sheet adhesive coating composition according to the embodiment of the present invention may further include a curing catalyst to improve sticky defects due to incomplete curing caused by rapid curing reaction during coil coating. The curing catalyst may include an imidazole-based curing catalyst.

The electrical steel sheet adhesive coating composition according to the embodiment of the present invention may include the curing catalyst in an amount of 0.1 to 5 parts by weight, based on 100 parts by weight of the total of the urethane resin and the metal inorganic acid salt. If the content of the curing catalyst is too high, problems such as inferior fastening strength after fusion due to excessive curing reaction may occur, while if the content of the curing catalyst is too low, problems such as stickiness on the surface of the fusion layer due to incomplete curing may occur. Specifically, it may be included in an amount of 0.5 to 3 parts by weight.

In addition to the aforementioned components, the adhesive coating composition may include a solvent to facilitate application and uniformly disperse the components. The solvent may include water, alcohol, and the like. The solvent may be included in an amount of 200 to 2000 parts by weight, based on 100 parts by weight of the sum of the urethane resin and the metal inorganic acid salt. In the embodiment of the present invention, parts by weight refers to a relative weight ratio.

In an embodiment of the present invention, an electrical steel sheet laminate is provided.

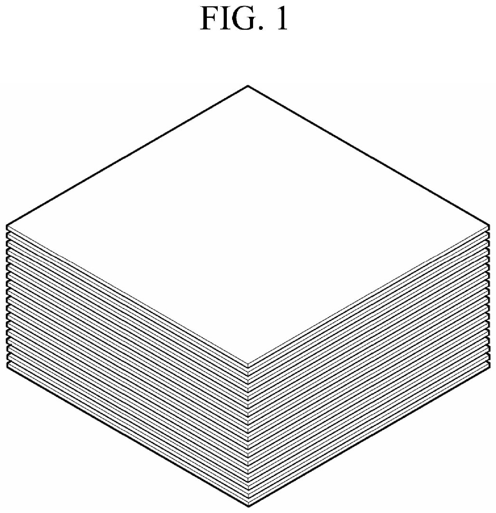

An electrical steel sheet laminate according to an embodiment of the present invention includes a plurality of electrical steel sheets; and a fusion layer positioned between the plurality of electrical steel sheets. FIG. 1 shows a schematic view of an electrical steel sheet laminate according to an embodiment. As shown in FIG. 1, it is a form in which a plurality of electrical steel sheets are laminated.

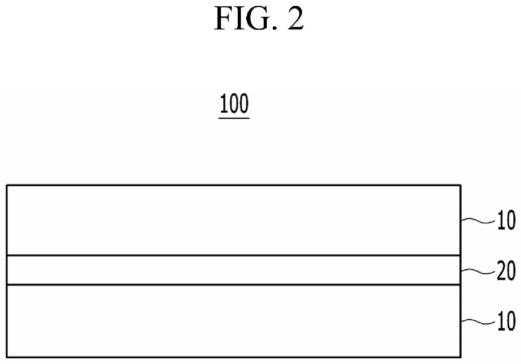

FIG. 2 shows a schematic view of a cross-section of an electrical steel sheet laminate according to an embodiment of the present invention. As shown in FIG. 2, an electrical steel sheet laminate 100 according to an embodiment of the present invention includes a plurality of electrical steel sheets 10; and a fusion layer 20 positioned between the plurality of electrical steel sheets.

In the embodiment of the present invention, the electrical steel sheet laminate may be a laminate where different electrical steel sheets are thermally fused by simply forming a fusion layer using the aforementioned adhesive coating composition, without using conventional methods such as welding, clamping, or interlocking.

In this case, the electrical steel sheet laminate has excellent characteristics of high-temperature adhesion and high-temperature oil resistance even after heat fusion.

Hereinafter, each configuration will be described in detail.

The electrical steel sheet 10 may be used without limitation as a general non-oriented or grain-oriented electrical steel sheet. In the embodiment of the present invention, the main configuration is to manufacture the electrical steel sheet laminate 100 by forming the fusion layer 20 between the plurality of electrical steel sheets 10, so a specific description of the electrical steel sheet 10 is omitted. More specifically, the electrical steel sheet 10 may be a non-oriented electrical steel sheet.

The fusion layer 20 is formed between the plurality of electrical steel sheets 10, and has strong adhesive strength sufficient to bond the plurality of electrical steel sheets 10 without using conventional fastening methods such as welding, clamping, or interlocking.

The fusion layer 20 is formed by coating an adhesive coating composition on the surface, curing it to form an adhesive coating layer, and laminating and heat- fusing the same. When a plurality of electrical steel sheets 10 having the adhesive coating layer formed thereon are laminated and heat-fused, the resin component within the adhesive coating layer is heat-fused to form a fusion layer.

In the embodiment of the present invention, the fusion layer 20 includes a urethane resin and a metal inorganic acid salt. The urethane resin and the metal inorganic acid salt have been described in detail in relation to the adhesive coating composition, so redundant descriptions are omitted. In the process of forming the fusion layer, the chemical structure, ratio, and the like of the urethane resin and the metal inorganic acid salt remain unchanged. In addition, the coupling agent, the curing agent, the curing catalyst, and the wetting additive also remain, and their content ranges may be the same as those of the adhesive coating composition. The coupling agent, the curing agent, the curing catalyst, and the wetting additive have been described in detail in relation to the adhesive coating composition, so redundant descriptions are omitted.

The fusion layer 20 may include 50 to 90 parts by weight of the urethane resin and 10 to 50 parts by weight of the metal inorganic salt, based on 100 parts by weight of the sum of the urethane resin and the metal inorganic acid salt.

In addition, the fusion layer 20 may further include 0.2 to 3 parts by weight of the coupling agent, 0.05 to 0.5 parts by weight of the wetting agent, 0.5 to 2 parts by weight of the curing agent, and 0.1 to 1 part by weight of the curing catalyst.

The thickness of the fusion layer 20 may be 1 µm to 8 µm. If the thickness of the fusion layer is too thin, the adhesive strength may decrease rapidly, and if it is too thick, defects due to stickiness may become a problem after the coating is wound. More specifically, the thickness of the fusion layer 20 may be 1 µm to 3 µm.

In the embodiment of the present invention, the electrical steel laminate has improved paint film adhesion, peel adhesive strength, and ATF resistance. When a driving motor is used in an automobile, a lot of heat is generated when it rotates at high speed for a long time, so automotive transmission fluid (ATF) is used to cool it. Therefore, to ensure adhesive reliability during long-term use, it is important that the adhesive strength of the laminated coil is maintained while impregnated in high-temperature ATF.

A method for manufacturing an electrical steel sheet laminate according to an embodiment of the present invention includes a step of applying an adhesive coating composition to one or both surfaces of an electrical steel sheet and then curing it to form an adhesive coating layer; and a step of laminating a plurality of electrical steel sheets having the adhesive coating layer formed thereon and hot-fusing them to form a fusion layer.

Hereinafter, each step will be specifically described.

First, an adhesive coating composition is prepared. The adhesive coating composition has been described above, so redundant description will be omitted.

Next, the adhesive coating composition is coated on the surface of the electrical steel sheet and then cured to form an adhesive coating layer. This step may be performed in a temperature range of 150 to 250°C to cure the adhesive coating composition.

A plurality of electrical steel sheets having the adhesive coating layer formed thereon are laminated and hot-fused to form a fusion layer 20. Through the hot-fusing step, polymer components within the adhesive coating layer are hot-fused, thereby forming the fusion layer.

The hot-fusing step may be performed by hot-fusing at a temperature of 150 to 250°C, a pressure of 0.05 to 5.0 MPa, and a pressurization duration of 0.1 to 120 minutes. The conditions may be each independently satisfied, and two or more conditions may be simultaneously satisfied. By adjusting the temperature, pressure, and time conditions in the hot-fusing step as described above, a dense hot-fusion may be achieved between the electrical steel sheets without gaps or organic phases.

The hot-fusing step includes a heating step and a fusing step, and the heating rate of the heating step can be 10°C/min to 1000°C/min.

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

### Experimental Example 1

Non-oriented electrical steel sheets (50 X 50 mm, 0.35mmt) were prepared as test specimens. An adhesive coating solution was applied to the upper and lower portions of each prepared test specimen at a constant thickness using a bar coater and a roll coater, cured at 200°C for 20 seconds based on the sheet temperature, and then slowly cooled in air to form an adhesive coating layer.

The adhesive coating solution was used containing 100 parts by weight of a polyurethane resin and a metal inorganic acid salt, 0.5 parts by weight of a silane coupling agent (3-glycidoxypropyl triethoxysilane), 0.1 parts by weight of a silicone-based wetting agent (polyether-modified siloxane), 1 part by weight of a dicyandiamide-based curing agent (adipic acid dihydrazide), and 0.5 parts by weight of an imidazole-based curing catalyst (1,2 dimethylimidazole).

The polyurethane resin was prepared by reacting 40 wt% of 2,4-methylene diphenyl diisocyanate monomer and 60 wt% of polyethylene carbonate diol having a water content of 425 g/mol, based on the total weight of the polyurethane resin, and then used, and the metal inorganic acid salt used was Al phosphate.

The content ratio of the used polyurethane resin and Al phosphate, and the type and content ratio of the isocyanate monomer and polyol used in the manufacturing of the polyurethane resin are shown in Table 1 below.

In Table 1, MDI refers to methylene diphenyl diisocyanate, TDI refers to toluene diisocyanate, and PCD refers to polyethylene carbonate diol (number molecular weight 425 g/mol).

Electrical steel sheets coated with the adhesive coating layer were laminated to a height of 20 mm, and then heat-fused at 160°C for 10 minutes under pressure of 0.5 MPa to manufacture an electrical steel laminate. The thickness of the fusion layer after heat fusion was approximately 3 µm. The heat-fused laminate was evaluated according to the mixing ratio of the mixed resin in the coating composition and the type of aromatic diisocyanate monomer used. Specifically, the paint film adhesion, peel adhesive strength (T-peel, N/mm), ATF resistance characteristics, and high-temperature adhesion were evaluated and shown in Table 1 below.

The measurement method for each characteristic is as follows.

Measurement method for paint film adhesion: The specimen specifications for measuring paint film adhesion were prepared according to ISO 1519. The coated specimen was prepared as a sample of 30 x 300 mm, bent 180° to fit a 10 mm diameter iron cylinder, and tape was adhered to the area, and then the presence or absence of peeling of the coating layer was visually observed. If peeling occurred, it was evaluated as NG, while if no peeling occurred, it was determined as OK.

Peel adhesion (T-peel, N/mm): The specimen specifications for measuring the peel method (T-peel off) were prepared according to ISO 11339. Two 25 x 200 mm specimens were bonded to an area of 25 x 150 mm², and the unbonded area was bent at 90° to produce a T-shaped tensile specimen. The tensile force of the laminated sample was measured using a device that measures the tension of the laminated sample by fixing the specimen manufactured by the peeling method (T-Peeloff method) to the upper and lower jigs with a constant force and then pulling it at a constant speed. At this time, in the case of the shear method, the measured value was a value measured at the point at which the interface with the minimum adhesive strength was peel out among the interfaces of the laminated samples. The adhesive strength was measured after maintaining the specimen temperature at 60°C using a heating device.

ATF resistance evaluation method : The manufactured laminated coil was impregnated in ATF (SP4M-1) at a temperature of 160°C for 1000 hours, and then its shear adhesive strength was tested. The shear adhesive strength for measuring the ATF resistance was measured using the shear method (Shear Strength). The specimen specifications for shear method measurements were prepared according to ISO 4587. Two 25 x 100 mm specimens were bonded to an area of 12.5 x 25 mm² and heat-fused under the above conditions to produce shear strength specimens. The tensile force of the laminated sample was measured using a device that measures the tension of the laminated sample by fixing the specimen manufactured by the shear method to the upper and lower jigs with a constant force and then pulling it at a constant speed. At this time, in the case of the shear method, the measured value was a value measured at the point at which the interface with the minimum adhesive strength was peel out among the interfaces of the laminated samples.

Evaluation of high temperature adhesive strength: Shear adhesive strength to measure high temperature adhesive strength was measured using the shear method (Shear Strength). The specimen specifications for shear method measurements were prepared according to ISO 4587. Two 25 x 100 mm specimens were bonded to an area of 12.5 x 25 mm² using a coating agent and heat-fused under the conditions described above to produce shear strength specimens. The specimens manufactured by the shear method were fixed to the upper and lower jigs (JIG) at a constant force after setting the high temperature atmosphere temperature in a tensile machine with a heating furnace, and the tensile force of the laminated sample was measured using a device that measures the tensile strength while pulling at a constant speed. At this time, in the case of the shear method, the measured value was a value measured at the point at which the interface with the minimum adhesive strength was peel out among the interfaces of the laminated samples. The adhesive strength was measured after maintaining the specimen temperature at 180°C using a heating device.

**(Table 1)**

| Classification | Polyuret hane resin (parts by weight) | Al phosphoric acid salt (parts by weight) | Polyurethane resin | | | | Paint film adhesion | Peel adhesive strength (N/mm) m) | ATF resistance (MPa) | High temperature adhesive strength (MPa) |
|---|---|---|---|---|---|---|---|---|---|---|
| | | | Aromatic diisocyanate | | Polyol | | | | | |
| | | | Type | Content (wt%) | Type | Cont ent (wt%) | | | | |
| Example 1 | 80 | 20 | 2,4 '-M DI | 40 | PCD | 60 | OK | 1.5 | 5.0 | 3.0 |
| Example 2 | 70 | 30 | 2,4 '-M DI | 40 | PCD | 60 | OK | 1.0 | 4.0 | 2.0 |
| Example 3 | 60 | 40 | 2,4 '-M DI | 40 | PCD | 60 | OK | 0.7 | 3.0 | 1.5 |
| Comparative Example 1 | 100 | 0 | 2,4 '-M DI | 40 | PCD | 60 | OK | 3.5 | 0.5 | 0.1 |
| Comparative Example 2 | 40 | 60 | 2,4 '- M DI | 40 | PCD | 60 | OK | 0.1 | 8.0 | 9.0 |
| Comparative Example 3 | 80 | 20 | 2,4 '-TD I | 30 | PC D | 70 | OK | 0.3 | 3.0 | 2.5 |
| Comparative Example 4 | 80 | 20 | 2,2 '-M DI | 40 | PC D | 60 | OK | 0.4 | 2.5 | 2.0 |
| Comparative Example 5 | 80 | 20 | 4,4 '-M DI | 40 | PC D | 60 | OK | 0.4 | 1.5 | 0.7 |
| Comparative Example 6 | 70 | 30 | 2,4 '-TD I | 30 | PC D | 70 | OK | 0.2 | 3.5 | 3.2 |
| Comparative Example 7 | 70 | 30 | 2,2 '-M DI | 40 | PC D | 60 | OK | 0.3 | 3.2 | 3.0 |
| Comparative Example 8 | 70 | 30 | 4,4 '-M DI | 40 | PC D | 60 | OK | 0.4 | 1.7 | 2.0 |
| Comparative Example 9 | 60 | 40 | 2,4 '-TD I | 30 | PCD | 70 | OK | 0.2 | 4.0 | 3.3 |
| Comparative Example 10 | 60 | 40 | 2,2 '-M DI | 40 | PCD | 60 | OK | 0.3 | 3.3 | 3.5 |
| Comparative Example 11 | 60 | 40 | 4,4 '-M DI | 40 | PCD | 60 | OK | 0.3 | 1.8 | 2.0 |
| Comparative Example 12 | 70 | 30 | 2,4 '-M DI | 40 | PPG | 60 | OK | 1.0 | 2.0 | 0.5 |

As shown in Table 1, when the polyurethane resin and the metal inorganic acid salt were mixed and used in an appropriate content ratio as in Example 1 to Example 3 and 2,4'-MDI (2,4-methylene diphenyl diisocyanate) was used as the aromatic diisocyanate monomer, excellent properties were exhibited in paint film adhesive strengh, peel adhesive strength, ATF resistance, and high-temperature adhesive strength.

It can be confirmed that Comparative Example 1 is a case where only a urethane resin is used without mixing a metal inorganic acid salt, and in this case, the peeling adhesive strength is excellent, but the high-temperature adhesive strength and ATF resistance are inferior, showing values of less than 1 MPa.

It can be confirmed that Comparative Example 2 is a case where a small amount of urethane resin was used, and in this case, the high-temperature adhesive strength and ATF resistance characteristics are excellent, but the peel adhesive strength shows a value of less than 0.5, and the adhesive strength is poor.

Comparative Example 3 to Comparative Example 11 are adhesive coating layers manufactured by changing the aromatic diisocyanate monomer in Example 1 to Example 3 to a compound other than 4'-MDI (2,4-methylene diphenyl diisocyanate).

It can be confirmed that in Comparative Examples 3, 6, and 9 using 2,4'-TDI (2,4-toluene diisocyanate) as an aromatic diisocyanate, the paint film adhesion, ATF resistance, and high-temperature adhesive strength are good, but the peel adhesive strength is inferior to that of the examples.

It can be confirmed that even in Comparative Examples 4, 7, and 10 using 2,2'-MDI (2,2-methylene diphenyl diisocyanate) as an aromatic diisocyanate, the paint film adhesion, ATF resistance, and high-temperature adhesive strength are good, but the peel adhesive strength is inferior to that of the examples.

It can be confirmed that in Comparative Examples 5, 8, and 11 using 4,4'-MDI (4,4-methylene diphenyl diisocyanate) as an aromatic diisocyanate, the paint film adhesion and high-temperature adhesive strength are good, but the peel adhesive strength and ATF resistance are inferior to those of the examples.

Comparative Example 12 is an example using polypropylene glycol as a polyol compound. It can be confirmed that the paint film adhesion, peeling adhesive strength, and ATF resistance are good, but the high-temperature adhesive strength is poor.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

### [Description of symbols]

| | | | |
|---|---|---|---|
| 100: | electrical steel sheet laminate | 10: | electrical steel sheet |
| 20: | fusion layer | | |

## Claims

1. An adhesive coating composition for an electrical steel sheet comprising:
a urethane resin and a metal inorganic acid salt,
wherein the urethane resin includes repeating units represented by the following Chemical Formula 1 and Chemical Formula 2. 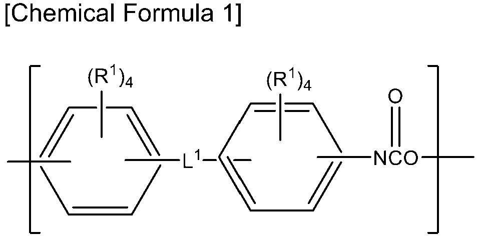 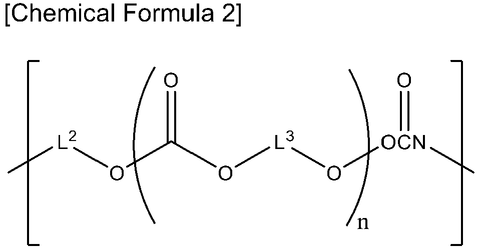
(In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element.
L¹, L², and L³ each represent a single bond or a divalent linking group.
n represents an integer from 1 to 50.)

2. The adhesive coating composition for the electrical steel sheet of claim 1, wherein
the urethane resin includes 50 to 90 parts by weight and the metal inorganic acid salt includes 10 to 50 parts by weight, based on 100 parts by weight of the total of the urethane resin and the metal inorganic acid salt.

3. The adhesive coating composition for the electrical steel sheet of claim 1, wherein
the urethane resin includes repeating units represented by the following Chemical Formula 3 and the above Chemical Formula 2. 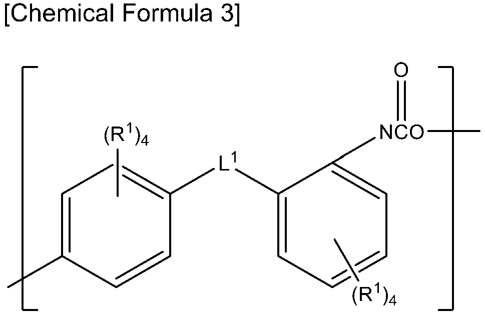
(In Chemical Formula 3, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. L¹ represents a single bond or a divalent linking group.)

4. The adhesive coating composition for the electrical steel sheet of claim 1, wherein
the urethane resin is formed by a reaction of a diisocyanate monomer and a polyol represented by the following Chemical Formula 4. 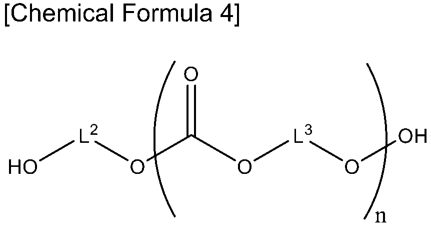
(In Chemical Formula 4 above, L² and L³ each represent a single bond or a divalent linking group. n represents an integer from 1 to 50.)

5. The adhesive coating composition for the electrical steel sheet of claim 4, wherein
the diisocyanate monomer includes an aromatic diisocyanate monomer.

6. The adhesive coating composition for the electrical steel sheet of claim 5, wherein
the aromatic diisocyanate monomer is a compound represented by the following Chemical Formula 5. 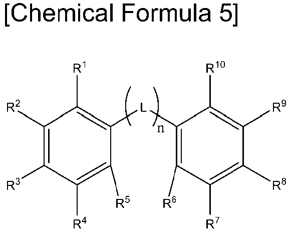
(In Chemical Formula 5, R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, a halogen element, or an isocyanate group,
at least one of R¹ to R⁵ is an isocyanate group,
at least one of R⁶ to R¹⁰ is an isocyanate group,
cases in which R³ and R⁸ are simultaneously isocyanate groups are excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is an integer from 1 to 10.)

7. The adhesive coating composition for the electrical steel sheet of claim 1, wherein
the metal inorganic acid salt includes a phosphate, a silicate, or a titanate that includes one or more of Al, Mg, Ca, Co, Zn, Zr, and Fe.

8. The adhesive coating composition for the electrical steel sheet of claim 1, further comprising
one or more selected from the group consisting of a coupling agent, a wetting agent, a curing agent, and a curing catalyst.

9. The adhesive coating composition for the electrical steel sheet of claim 8, wherein
the coupling agent includes 0.2 parts by weight to 3 parts by weight, based on 100 parts by weight of the total of the urethane resin and the metal inorganic acid salt.

10. The adhesive coating composition for the electrical steel sheet of claim 8, wherein
the curing agent includes 0.5 parts by weight to 2 parts by weight, based on 100 parts by weight of the total of the urethane resin and the metal inorganic acid salt.

11. The adhesive coating composition for the electrical steel sheet of claim 8, wherein
the curing catalyst includes 0.1 parts by weight to 1 parts by weight, based on 100 parts by weight of the total of the urethane resin and the metal inorganic acid salt.

12. The adhesive coating composition for the electrical steel sheet of claim 8, wherein
the wetting agent includes 0.05 parts by weight to 0.5 parts by weight, based on 100 parts by weight of the total of the urethane resin and the metal inorganic acid salt.

13. An electrical steel sheet laminate comprising:
a plurality of electrical steel sheets; and
a fusion layer positioned between the plurality of electrical steel sheets;
wherein the fusion layer includes a urethane resin and a metal inorganic acid salt, and
the urethane resin includes repeating units represented by the following Chemical Formula 1 and Chemical Formula 2. 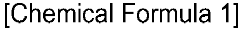 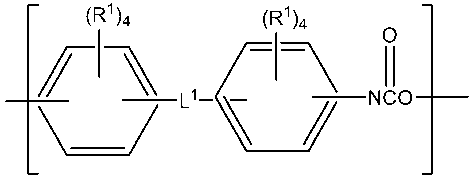 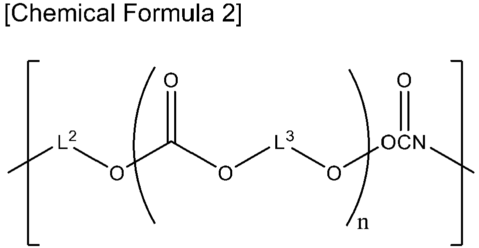
(In Chemical Formula 1 and Chemical Formula 2, R¹ each independently represents hydrogen, deuterium, a substituted or unsubstituted C1 to C10 alkyl group, a substituted or unsubstituted C6 to C20 aryl group, a substituted or unsubstituted C5 to C20 heteroaryl group, a hydroxyl group, or a halogen element. L¹, L², and L³ each represent a single bond or a divalent linking group. n represents an integer from 1 to 50.)

14. The electrical steel sheet laminate of claim 13, wherein
the fusion layer includes 50 to 90 parts by weight of the urethane resin and 10 to 50 parts by weight of the metal inorganic acid salt, based on 100 parts by weight of the total of the urethane resin and the metal inorganic acid salt.

15. A method for manufacturing an electrical steel sheet laminate, comprising:
a step of applying the adhesive coating composition according to claim 1 to one or both surfaces of an electrical steel sheet, and then curing it to form an adhesive coating layer; and
a step of laminating a plurality of electrical steel sheets on which the adhesive coating layer is formed and heat-fusing them to form a fusion layer.
